Europäisches Patentamt

European Patent Office

Office européen des brevets

(19)

(11) **EP 1 184 697 A1**

(12) **EUROPEAN PATENT APPLICATION**
published in accordance with Art. 158(3) EPC

(43) Date of publication:
06.03.2002 Bulletin 2002/10

(51) Int Cl.⁷: $G02B\ 6/42$

(21) Application number: 01921828.8

(86) International application number:
PCT/JP01/03186

(22) Date of filing: 13.04.2001

(87) International publication number:
WO 01/79906 (25.10.2001 Gazette 2001/43)

(84) Designated Contracting States:
AT BE CH CY DE DK ES FI FR GB GR IE IT LI LU
MC NL PT SE TR
Designated Extension States:
AL LT LV MK RO SI

(30) Priority: 14.04.2000 JP 2000011303

(71) Applicant: HOSIDEN CORPORATION
Yao-shi, Osaka 581-0071 (JP)

(72) Inventors:
• OHBAYASHI, Yoshiaki
  Nara-shi, Nara 631-0045 (JP)
• MINE, Keiji
  Yao-shi, Osaka 581-0071 (JP)
• NAKAGAWA, Hiroshi
  Souraku-gun, Kyoto 619-0237 (JP)

(74) Representative: Hoffmann, Eckart, Dipl.-Ing.
Patentanwalt, Bahnhofstrasse 103
82166 Gräfelfing (DE)

(54) **MICRO OPTICAL CONNECTOR AND PORTABLE ELECTRONIC DEVICE WITH CONNECTION TERMINAL INTO WHICH PLUG OF THE OPTICAL CONNECTOR IS PLUGGED**

(57) There is provided a subminiature optical connector comprising a subminiature single head optical plug having its sleeve of 2.5 mm in outside diameter corresponding to a subminiature single head plug for only electric signal use and having its sleeve of 2.5 mm in outside diameter which is in practical use, the optical plug being able to use together with a receptacle in practical use.

In the subminiature single head optical plug comprising a cylindrical sleeve of approximately 2.5 mm in its outside diameter; and a hollow tip coupled to the front end of the sleeve and having its maximum diameter position located between the front end and the rear end of the tip, a length extending from the rear end of the sleeve to the maximum diameter position of the tip is defined to (10.3 ± 0.3) mm, and the overall length of the plug extending from the rear end of the sleeve to the front end of the tip is defined to a length between 11.8 mm and 12.1 mm. Alternatively, by reducing the overall length of the sleeve, the overall length of the plug extending from the rear end of the sleeve to the front end of the tip may be shortened to a length shorter than the overall length of the subminiature single head plug for only electric signal use having its sleeve of 2.5 mm in outside diameter, which is in practical use.

FIG. 1

EP 1 184 697 A1

## Description

<u>TECHNICAL FIELD</u>

The present invention relates to a subminiature optical connector comprising a subminiature single head optical plug the sleeve of which is approximately 2.5 mm in its outside diameter and a connecting terminal into which the optical plug is to be inserted, and to a portable type electronic apparatus having the connecting terminal of the optical connector mounted thereto. More particularly, the present invention relates to a subminiature optical connector having a subminiature single head optical plug which can be used in transmitting an optical signal as well as in transmitting an electrical signal, and to a portable type electronic apparatus having a connecting terminal of the optical connector mounted thereto.

<u>BACKGROUND ART</u>

Miniature audio visual apparatus such as a DVD (Digital Versatile Disk) player/recorder, MD (Mini-Disk) player/recorder, CD (Compact Disk) player/recorder and the like, portable audio apparatus such as an MD portable player/recorder, CD portable player/recorder, memory type audio apparatus (audio apparatus using a memory stick) and the like, or mobile communication apparatus such as a mobile phone, pocket or portable telephone and the like have been miniaturized more and more in their external forms or shapes and sizes, and accordingly, an input terminal and/or output terminal built in or mounted to these electronic apparatus have been also miniaturized. Particularly, in recent years, with the advance of optical technology, there have been provided many kinds of audio visual apparatus, portable audio apparatus, mobile communication apparatus and the like, each being provided with an optical input terminal and/or output terminal for an optical or light signal. These electronic apparatus provided with an optical input terminal and/or output terminal have been also miniaturized.

The above-mentioned various types of miniature electronic apparatus have signal input terminals and/or signal output terminals for an audio signal, video signal, etc., mounted thereto, and recently, there are many miniature electronic apparatus that have not only signal input terminals and/or signal output terminals for an electrical signal mounted thereto but also signal input terminals and/or signal output terminals for an optical signal mounted thereto. Generally, a connecting terminal (a receptacle or jack) of a miniature connector is used as those input/output terminals, and a plug of the miniature connector is inserted into the connecting terminal (hereinafter, referred to as receptacle) so that the receptacle and the plug can be electrically or optically connected with each other, the plug having a cable (for example, coaxial cable) that transmits an electrical signal or a cable (for example, optical fiber) that transmits an optical or light signal connected thereto.

In respect of a plug of a miniature electrical connector, to which a cable that transmits an electrical signal is connected, a "two-electrode or three-electrode subminiature single head plug" the sleeve of which is 2.5 mm in its outside diameter has been prescribed by JIS (Japanese Industrial Standard) C6560, and is put to practical use. However, in respect of a plug of a subminiature optical connector, to which a cable that transmits an optical signal is connected, there is prescribed by EIAJ (Electronic Industries Association of Japan) (EIAJ RC-5720A) only a miniature optical plug the sleeve of which is 3.5 mm in its outside diameter at the minimum, and a subminiature single head optical plug having its sleeve of the same outside diameter as that (2.5 mm) of the sleeve of the two-electrode or three-electrode subminiature single head plug for only electrical signal use prescribed by JIS C6560 has not been prescribed yet by EIAJ or other standards. Of course, a subminiature optical receptacle corresponding to the subminiature single head optical plug has not been prescribed by EIAJ or other standards, either.

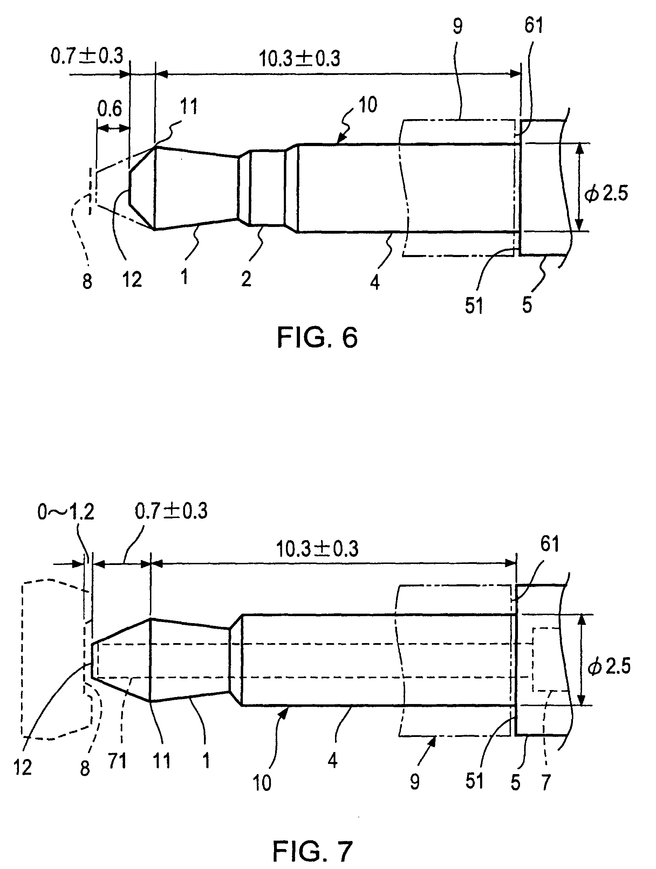

Now, the two-electrode subminiature single head plug of the "two-electrode or three-electrode subminiature single head plug" prescribed by JIS C6560 will be described with reference to Fig. 6.

As shown in Fig. 6, the two-electrode subminiature single head plug 10 prescribed by JIS C6560 comprises a sleeve 4 the outside diameter of which has been determined to 2.5 mm as discussed above. The root of the sleeve 4 is fixed to a stem 5 having its outside diameter larger than that of the sleeve 4, and a hollow tip 1 is mounted to the front end of the sleeve 4 through an insulation collar 2. This subminiature single head plug 10 is configured such that the length extending from the rear end of the sleeve 4 which is equivalent in position to the front end surface 51 of the stem 5 to a position 11 of the tip 1 where its outside diameter is the maximum (the maximum diameter position of the tip 1) is determined to $(10.3 \pm 0.3)$ mm as well as the length from the maximum diameter position 11 of the tip 1 to the front end 12 of the tip 1 is determined to $(0.7 \pm 0.3)$ mm. Accordingly, the overall length of the two-electrode subminiature single head plug 10 is

$$(10.3 + 0.3) + (0.7 + 0.3) = 11.6 \text{ mm}$$

at the maximum, and is

$$(10.3 - 0.3) + (0.7 - 0.3) = 10.4 \text{ mm}$$

at the minimum.

Further, a three-electrode subminiature single head plug, though it is not shown, is also configured such that the length from the rear end of a sleeve to the maximum diameter position of a tip as well as the length from the maximum diameter position of the tip to the front end of the tip are determined to the same lengths as those of the two-electrode subminiature single head plug 10 explained above, except that the sleeve of the three-electrode subminiature single head plug has three electrodes provided thereto. Accordingly, the overall length of the three-electrode subminiature single head plug is also determined to the same as that of the two-electrode subminiature single head plug 10.

In case of the subminiature single head connector for only electrical signal use, a receptacle corresponding to the aforesaid two-electrode or three-electrode subminiature single head plug 10 having the sleeve of 2.5 mm in its outside diameter is also prescribed by JIS, and the two-electrode or three-electrode subminiature single head plug 10 is used in the manner that it is inserted into such receptacle.

Since the two-electrode or three-electrode subminiature single head plug 10 has been prescribed as mentioned above, the overall length of this plug 10 is, on taking the above allowance into consideration, 11.6 mm in case of a product of the longest overall length as described above. When such two-electrode or three-electrode subminiature single head plug 10 is inserted into a corresponding receptacle 9, the two-electrode or three-electrode subminiature single head plug 10 is checked in its further insertion by the front end surface 51 of the stem 5 abutting against the end surface 61 of the approach to an inserting hole of the corresponding receptacle 9 in which the plug 10 is to be fitted. As a result, the front end 12 of the tip 1 of the plug 10 will be located in a position between 10.4 mm that is the shortest length of the plug 10 measured from the end surface 61 of the approach and 11.6 mm that is the longest length of the plug 10 measured from the end surface 61 of the approach.

As discussed above, various types of miniature electronic apparatus show a tendency to be miniaturized more and more. Each of miniature electronic apparatus having a receptacle for receiving an optical signal and/or a receptacle for outputting an optical signal mounted thereto is provided with a receptacle corresponding to an optical plug the sleeve of which is 3.5 mm in its outside diameter, because in the existing circumstances, only an optical plug the sleeve of which is 3.5 mm in its outside diameter at the minimum and a receptacle into which this optical plug is to be inserted have been prescribed. In order to further miniaturize such miniature electronic apparatus, the external form or shape and size of the optical receptacle to be mounted thereto must be reduced. For this reason, there is increasing more and more a necessity of developing a subminiature single head optical plug having its sleeve the outside diameter of which is 2.5 mm as well as an optical receptacle into which such optical plug is to be inserted.

Now, in case that a subminiature single head optical plug is manufactured with its external shape and size substantially equal to those of the aforesaid two-electrode or three-electrode subminiature single head plug for only electrical signal use prescribed by JIS C6560, as shown in Fig. 7, the front end surface of the core 71 of an optical fiber 7 is located in the hollow tip 1 of the subminiature single head optical plug 10 at the immediate inner side of the front end 12 of the hollow tip 1. When such subminiature single head optical plug 10 is inserted into the corresponding optical receptacle 9, the front end of the core 71 of the optical fiber 7 is opposite to and approaches an optical element 8 accommodated in the optical receptacle 9 so that light can be incident upon the optical element 8 from the optical fiber 7 or upon the optical fiber 7 from the optical element 8, and an optical signal can be transmitted therebetween. Further, in case of the optical plug, it is unnecessary to provide an insulation collar 2. Accordingly, in Fig. 7, the tip 1 is directly mounted to the sleeve 4.

In such case, if the overall length of the subminiature single head optical plug 10 is too long as compared with the depth of the receptacle 9, it is feared that the front end 12 of the tip 1 of the subminiature single head optical plug 10 will collide against the optical element 8 or a lens located at the front of the optical element 8 so that the optical element 8 or the lens will be damaged. Therefore, in order to prevent the optical element 8 or the lens located at the front thereof from being damaged even if a subminiature plug the overall length of which is 11.6 mm is inserted into the optical element 8, 11.6 mm being equal to the maximum length of the subminiature single head plug prescribed by JIS C6560, the optical element 8 is located at a position that has entered toward the inside of the receptacle 9 by at least 11.6 mm from the end surface 61 of the approach to the inserting hole of the receptacle 9. As a result, in case that the subminiature single head optical plug 10 of 11.6 mm in its overall length equal to the maximum length is inserted into the receptacle 9, a distance between the front end of the tip 1 and the optical element 8 opposed thereto approximates to zero (0 mm). In contrast thereto, in case that the subminiature single head optical plug 10 of 10.4 mm in its overall length equal to the minimum length is inserted into the receptacle 9, a distance between the front end of the tip 1 and the optical element 8 opposed thereto approximates to 1.2 mm. Accordingly, the difference in the distance between the front end of the tip 1 and the optical element 8 ranges from substantially zero to about 1.2 mm due to the unevenness in manufacture relating to the overall length of each of products of the subminiature single head optical plugs. Consequently, the difference in the space between the front end surface of the core 71 of the optical fiber 7 located at the immediate inner side of the front end of the tip 1 and the optical element 8 also ranges from substantially zero to about 1.2 mm.

As described above, the space between the front end surface of the core 71 of the optical fiber 7 and the optical element 8 opposed to the front end surface extends over a wide range such as from substantially 0 mm to about 1.2 mm. As a result, there occurs a considerable difference in quantity of light that is incident upon the optical element 8 from the optical fiber 7 or incident upon the optical fiber 7 from the optical element 8, which results in an important problem that transmission of an optical signal is adversely affected. Therefore, even though a subminiature single head optical plug is designed and manufactured as JIS C6560 prescribes, there is a drawback that such subminiature single head optical plug cannot be used together with a receptacle in practical use.

DISCLOSURE OF THE INVENTION

It is a first object of the present invention to provide a subminiature optical connector comprising a subminiature single head optical plug having its sleeve of 2.5 mm in outside diameter corresponding to a subminiature single head plug for only electric signal use having its sleeve of 2.5 mm in outside diameter which is in practical use, the optical plug being able to use together with a receptacle in practical use.

It is a second object of the present invention to provide a subminiature optical connector comprising a subminiature single head optical plug having its sleeve of 2.5 mm in outside diameter corresponding to a subminiature single head plug for only electric signal use having its sleeve of 2.5 mm in outside diameter which is in practical use, the overall length of the optical plug being shortened to a length shorter than the overall length of the aforesaid subminiature single head plug for only electric signal use by reducing the overall length of the sleeve of the optical plug.

It is a third object of the present invention to provide a subminiature optical connector comprising a receptacle which can be miniaturized as compared with a receptacle for only electric signal use into which a subminiature single head plug for only electric signal use having its sleeve of 2.5 mm in outside diameter which is in practical use is to be inserted.

It is a fourth object of the present invention to provide a portable type electronic apparatus having a receptacle mounted thereto which can be miniaturized as compared with a receptacle for only electric signal use into which a subminiature single head plug for only electric signal use having its sleeve of 2.5 mm in outside diameter which is in practical use is to be inserted.

In order to accomplish the above objects, in a first aspect of the present invention, there is provided a subminiature optical connector comprising: a subminiature single head optical plug; and a connecting terminal into which the plug is to be inserted, the subminiature single head optical plug comprising: a cylindrical sleeve having its outside diameter of approximately 2.5 mm; and a hollow tip coupled to the front end of the sleeve and having its maximum diameter position located between the front end and the rear end of the tip, the overall length of the plug extending from the rear end of the sleeve to the front end of the tip being defined to a length between 11.8 mm and 12.1 mm.

In a first preferred embodiment, the aforesaid subminiature single head optical plug is formed by that a length extending from the rear end of the sleeve to the maximum diameter position of the tip is first defined to $(10.3 \pm 0.3)$ mm and thereafter, the overall length of the plug extending from the rear end of the sleeve to the front end of the tip is defined to a length between 11.8 mm and 12.1 mm.

The aforesaid connecting terminal is provided with biasing retentive pieces for giving a force to retain the tip of the subminiature single head optical plug in place, and includes an optical element located at a position entered toward the inside of the connecting terminal by at least a distance equal to the maximum overall length of the subminiature single head optical plug from the end surface of the approach to an inserting hole into which the subminiature single head optical plug is to be inserted.

The subminiature single head optical plug includes an optical fiber extending through the inside of the sleeve into the inside of the tip, and the front end surface of the core of the optical fiber is located in the tip at the immediate inner side of the front end of the tip.

The subminiature single head optical plug inclusive of the optical fiber may be integrally formed by a molding of a synthetic resin. In addition, the connecting terminal except the optical element may be integrally formed by a molding of a synthetic resin.

Alternatively, the subminiature single head optical plug and the connecting terminal may be also used in transmitting and/or receiving an electric signal by housing electric cables in the insides of the sleeve and the tip of the subminiature single head optical plug respectively, making at least a portion of each of the sleeve and the tip from an electric conductor, electrically connecting the electric conductors of the sleeve and the tip to corresponding cables of the electric cables respectively, and making the biasing retentive pieces from a resilient electric conductor.

In a second aspect of the present invention, there is provided a subminiature optical connector comprising: a subminiature single head optical plug; and a connecting terminal into which the plug is to be inserted, the aforesaid subminiature single head optical plug comprising: a cylindrical sleeve having its outside diameter of approximately 2.5 mm; and a hollow tip coupled to the front end of the sleeve and having its maximum diameter position located between the front end and the rear end of the tip, the overall length of the plug extending from the rear end of the sleeve to the front end of the tip being defined to a length shorter than 11.6 mm.

In a second preferred embodiment, the aforesaid subminiature single head optical plug is formed to have the overall length thereof shorter than 11.6 mm extending from the rear end of the sleeve to the front end of the tip by reducing the overall length of the sleeve.

The aforesaid connecting terminal is provided with biasing retentive pieces for giving a force to retain the tip of the subminiature single head optical plug in place, and includes an optical element located at a position entered toward the inside of the connecting terminal by at least a distance equal to the maximum overall length of the subminiature single head optical plug from the end surface of the approach to an inserting hole into which the subminiature single head optical plug is to be inserted.

The subminiature single head optical plug includes an optical fiber extending through the inside of the sleeve into the inside of the tip, and the front end surface of the core of the optical fiber is located in the tip at the immediate inner side of the front end of the tip.

The subminiature single head optical plug inclusive of the optical fiber may be integrally formed by a molding of a synthetic resin. In addition, the connecting terminal except the optical element may be integrally formed by a molding of a synthetic resin.

Alternatively, the subminiature single head optical plug and the connecting terminal may be also used in transmitting and/or receiving an electric signal by housing electric cables in the insides of the sleeve and the tip of the subminiature single head optical plug respectively, making at least a portion of each of the sleeve and the tip from an electric conductor, electrically connecting the electric conductors of the sleeve and the tip to corresponding cables of the electric cables respectively, and making the biasing retentive pieces from a resilient electric conductor.

It is preferable that the overall length of the sleeve of the subminiature single head optical plug is reduced by a length equal to or more than a length corresponding to the depth of the optical element located inside the connecting terminal.

A cylindrical adapter of a predetermined length having its inside diameter of approximately 2.5 mm may be fitted on and fixed to the sleeve of the subminiature single head optical plug having its overall length defined to a length between 11.8 mm and 12.1 mm so that the length of that sleeve can come to a length seemingly equal to the length of the sleeve of the subminiature single head optical plug of the aforesaid second embodiment as well as that sleeve can be used together with the connecting terminal of the second embodiment.

Alternatively, the connecting terminal of the second embodiment may be provided with a tip checking means for stopping, when the subminiature single head optical plug is inserted into the inserting hole of the connecting terminal, an onward movement of the front end of the tip into the connecting terminal at a position immediately before the optical element.

In a third aspect of the present invention, there is provided a portable type electronic apparatus provided with the connecting terminal of the subminiature single head optical connector as disclosed in any one of the aforesaid first and second embodiments.

In accordance with the constructions described above, it is possible that the fluctuations of space between the optical fiber and the optical element occurring due to the unevenness in manufacture of each of products of the subminiature single head optical plugs fall within the range of 0 mm to 0.3 mm. Accordingly, optical signals having substantially the same quantity of light with one another can always be transmitted without regard to the unevenness in manufacture of the subminiature single head optical plugs. Moreover, the subminiature single head optical plug can be used together with a receptacle in practical use, and yet, it gives no damage to the optical element or lens.

In addition, since the subminiature single head optical plug can be greatly shortened in its overall length, the overall length (depth) of a receptacle corresponding to the shortened subminiature single head optical plug can also be shortened than that of the receptacle corresponding to the subminiature single head plug for only electrical signal use prescribed by JIS C6560. As a result, the subminiature single head optical plug and the receptacle can be miniaturized as well as it is possible to further miniaturize a portable type electronic apparatus by mounting such subminiature optical receptacle to the electronic apparatus.

Furthermore, in case of using the subminiature plug and the receptacle as a subminiature single head optical plug and an optical receptacle both for only optical signal use, they can be integrally formed by a molding of a thermoplastic synthetic resin. Therefore, the manufacturing costs of the subminiature single head optical plug and the optical receptacle can be reduced. In addition, the optical receptacle can be used together with the subminiature single head plug for only electrical signal use prescribed by JIS C6560.

BRIEF DESCRIPTION OF THE DRAWINGS

Fig. 1 is a plan view showing the first embodiment of the subminiature single head optical plug used in the subminiature optical connector according to the present invention;

Fig. 2 is a plan view showing the second embodiment of the subminiature single head optical plug used in the subminiature optical connector according to the present invention;

Fig. 3 is a partly sectional plan view showing an example of the receptacle corresponding to the subminiature single head optical plug of the second embodiment shown in Fig. 2;

Fig. 4 is a perspective view showing an example of the adapter used in the subminiature single head optical plug shown in Fig. 1;

Fig. 5 is a partly sectional plan view showing an example of the receptacle corresponding to the subminiature single head optical plugs shown in Figs. 1 and 3;

Fig. 6 is a plan view showing a two-electrode subminiature single head plug for only electrical signal use prescribed by JIS C6560; and

Fig. 7 is a plan view showing a subminiature single head optical plug formed to have substantially the same external shape and size as those of the subminiature single head plug shown in Fig. 6.

## BEST MODE FOR CARRYING OUT THE INVENTION

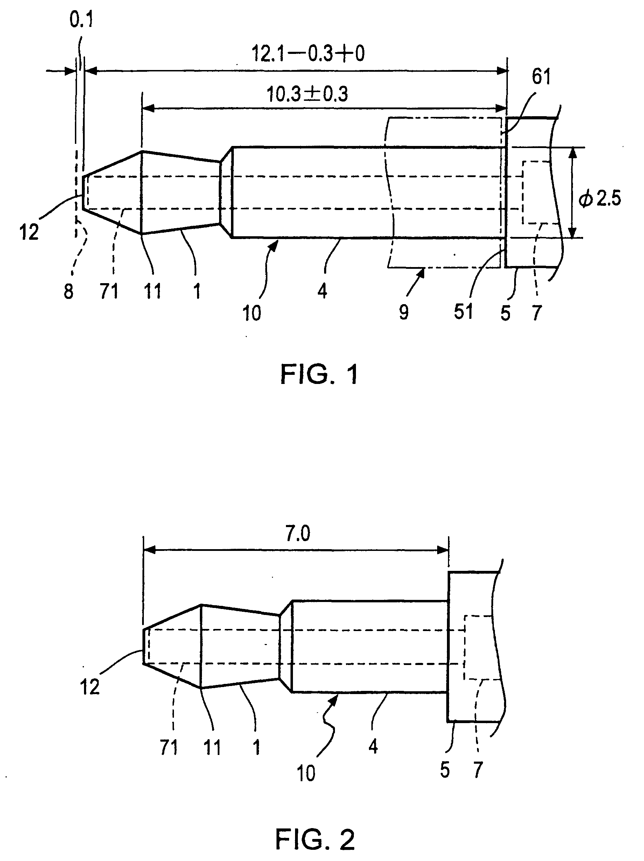

Now, the present invention will be described with regard to preferred embodiments of the present invention in detail with reference to Figs. 1 to 5. The present invention may, however, be embodied in many different forms and should not be construed as limited to the embodiments set forth hereinafter; rather, the embodiments are provided so that this disclosure will be thorough and complete, and will fully convey the scope of the invention to those skilled in the art.

Fig. 1 is a plan view showing the first embodiment of the subminiature single head optical plug used in the subminiature optical connector according to the present invention. Further, elements and/or portions in Fig. 1 corresponding to those shown in Figs. 6 and 7 will be shown by the same reference characters affixed thereto, and the explanation thereof will be omitted unless it is necessary.

In this first embodiment, the outside diameter of the sleeve 4 of the subminiature single head optical plug 10 is determined to 2.5 mm which is the same as that of the sleeve of the two-electrode or three-electrode subminiature single head plug for only electrical signal use prescribed by JIS C6560, and the overall length of the subminiature single head optical plug 10 is determined to (12.1 - 0.3 + 0) mm. Specifically, a length from the rear end of the sleeve 4 (which is equivalent in position to the front end surface 51 of the stem 5) to the maximum diameter position 11 of the hollow tip 1 thereof is first determined to (10.3 ± 0.3) mm which is the same as that of the two-electrode or three-electrode subminiature single head plug for only electrical signal use prescribed by JIS C6560, and then, the overall length of the optical plug 10 extending from the rear end of the sleeve 4 to the front end 12 of the tip 1 is determined to (12.1 - 0.3 + 0) mm. Thereafter, the optical plug 10 is manufactured. As a result, the overall length of the subminiature single head optical plug 10 becomes 12.1 mm at the maximum and 11.8 mm at the minimum.

The maximum overall length of the subminiature single head optical plug 10 manufactured by defining in such manner is increased by 0.5 mm (12.1 - 11.6) as compared with that of the two-electrode or three-electrode subminiature single head plug for only electrical signal use prescribed by JIS C6560 which has been already described with reference to Fig. 6. Since the length from the rear end of the sleeve 4 to the maximum diameter position 11 of the tip 1 has been determined to (10.3 ± 0.3) mm in this embodiment, the overall length of the optical plug 10 has been determined to (12.1 - 0.3 + 0) mm by varying the length from the maximum diameter position 11 of the tip 1 to the front end 12 thereof so that it is increased by 0.5 mm as compared with that of the two-electrode or three-electrode subminiature single head plug prescribed by JIS C6560. Accordingly, the length from the rear end of the sleeve 4 of the optical plug 10 to the maximum diameter position 11 of the tip 1 thereof is totally the same as that of the two-electrode or three-electrode subminiature single head plug for only electrical signal use prescribed by JIS C6560 and shown in Fig. 6, and hence the optical plug 10 can be configured to have the same external size and shape as those of the two-electrode or three-electrode subminiature single head plug.

As discussed above, the subminiature single head optical plug 10 of the first embodiment is longer by 0.5 mm in its maximum overall length than that of the two-electrode or three-electrode subminiature single head plug for only electrical signal use prescribed by JIS C6560. If the optical element 8 is located in a receptacle 9 corresponding to the two-electrode or three-electrode subminiature single head plug prescribed by JIS C6560 at a position entered toward the inside of the receptacle by 12.1 mm from the end surface 61 of the approach to an inserting hole of the receptacle 9, there is no possibility that the front end 12 of the tip 1 of the subminiature single head optical plug 10 comes into contact with the optical element 8 opposed thereto when the optical plug 10 is fitted in the receptacle 9, and hence the optical element 8 cannot be damaged. In reality, in order to certainly avoid a collision between the optical element 8 and the optical plug 10, it is arranged that a space of about 0.1 mm is left between the optical element 8 and the front end 12 of the tip 1 of the optical plug 10. Accordingly, in general, the optical element 8 is located at a position entered toward the inside of the receptacle by approximately 12.2 mm from the end surface 61 of the approach to the inserting hole. Thus, the receptacle 9 has its optical reference plane at an axial position entered toward the inside of the receptacle 9 by approximately 12.2 mm from the end surface 61 of the approach to the inserting hole.

With the construction described above, in case that the optical plug 10 has the maximum overall length of 12.1 mm, a space between the front end surface of the core 71 of the optical fiber 7 and the optical element 8 opposed thereto comes to 0.1 mm, and in case that the optical plug 10 has the minimum overall length of 11.8 mm, a space between the front end surface of the core 71 of the optical fiber 7 and the optical element 8 comes to 0.4 mm. Therefore, the fluctuations of space between the optical fiber 7 and the optical element 8 occurring due to the unevenness in manufacture relating to the overall length of each of products of the subminiature single head optical plugs 10 fall within the range of 0 mm to 0.3 mm. As a result, there hardly occurs a difference in quantity of light that is incident upon the optical element 8 from the optical fiber 7 or incident upon the optical fiber 7 from the optical element 8 so that optical signals having substantially the same quantity of light with one another can be always transmitted without regard to the unevenness in manufacture of the subminiature single head optical plug 10. Thus, there can be provided a subminiature single head optical plug which is capable of using together with a receptacle in practical use, gives no damage to the optical element 8 and can always transmit light having substantially the same quantity.

In addition, in case that the two-electrode or three-electrode subminiature single head plug prescribed by JIS C6560 is inserted into the receptacle 9 in which above-mentioned optical element 8 is mounted, a distance between the front end of the tip of this plug and the optical element 8 becomes 0.6 mm at the minimum and 1.8 mm at the maximum, and hence the optical element 8 is not damaged at all. Accordingly, such receptacle 9 can also be used as it stands in transmitting an electrical signal together with the subminiature single head plug for only electrical signal use prescribed by JIS C6560, which has been fitted in the receptacle 9. Moreover, in the subminiature single head optical plug 10 shown in Fig. 1, if a coaxial cable, for example, is inserted into the insides of the sleeve 4 and the tip 1 instead of the optical fiber 7, the tip 1 and the core of the coaxial cable are electrically connected with each other, and the shielding wire of the coaxial cable and the sleeve 4 are electrically connected with each other, such subminiature single head optical plug 10 can also be used as a subminiature single head plug for only electrical signal use which is equivalent to the subminiature single head plug prescribed by JIS C6560.

Fig. 2 is a plan view showing the second embodiment of the subminiature single head optical plug used in the subminiature optical connector according to the present invention. This second embodiment is characterized in that it is further miniaturized by reducing the overall length of the subminiature single head optical plug 10 of the first embodiment shown in Fig. 1 to less than 11.6 mm.

In case that the subminiature single head optical plug 10 shown in Fig. 1 is constructed as an optical plug for only optical signal use, it is unnecessary to use the sleeve 4 as an electrode. Therefore, there occurs no problem in shortening the overall length of the sleeve 4 to a substantial extent. Accordingly, in this second embodiment, the overall length of the sleeve 4 is greatly reduced to define the overall length of the subminiature single head optical plug 10 to (7.0 - 0.3 + 0) mm, for example, whereas the shape and size of the tip 1 are designed identically with those of the tip of the subminiature single head optical plug 10 of the first embodiment and manufactured. In the illustrated example, the overall length of the optical plug 10 is 7 mm which results in a great reduction of about 5 mm (strictly speaking, it is 5.1 mm) in the overall length as compared with the first embodiment.

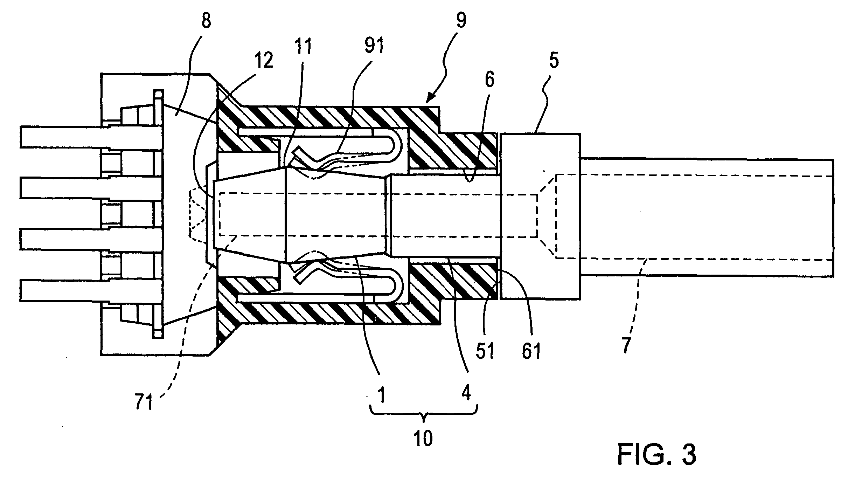

Fig. 3 is a plan view showing the corresponding receptacle 9 a part of which is shown in section, in order to explain a manner that the subminiature single head optical plug 10 of the second embodiment has been fitted in the receptacle 9. The illustrated receptacle 9 has substantially the same construction as a receptacle corresponding to the subminiature single head plug prescribed by JIS C6560 except that the receptacle 9 has the optical element 8 located therein at a position that is entered toward the inside thereof by 7 mm from the end surface 61 of the approach to the inserting hole 6 of the receptacle 9. In fact, the distance from the end surface 61 of the approach to the inserting hole 6 to the optical element 8 is set to 7.1 mm which is the sum of the overall length of the subminiature single head optical plug 10 and 0.1 mm, in order to surely avoid a collision between the subminiature single head optical plug 10 and the optical element 8.

Consequently, in case that the optical plug 10 has the maximum overall length of 7.0 mm, a space between the front end surface of the core 71 of the optical fiber 7 and the optical element 8 comes to 0.1 mm. On the other hand, in case that the optical plug 10 has the minimum overall length of 6.7 mm, a space between the front end surface of the core 71 of the optical fiber 7 and the optical element 8 comes to 0.4 mm. Therefore, the fluctuations of space between the optical fiber 7 and the optical element 8 occurring due to the unevenness in manufacture of the subminiature single head optical plug 10 fall within the range of 0 mm to 0.3 mm as in the first embodiment described above. Accordingly, in case of the second embodiment, it is apparent that the same function and effect as in the first embodiment can also be obtained, and the explanation thereof will be omitted.

Moreover, in case of the second embodiment, since the overall length of the optical plug 10 is 7 mm at the maximum, it is shorter by about 4 mm than that of the subminiature single head plug prescribed by JIS C6560. As a result, if the depth or thickness of the optical element 8 is less than 4 mm, the overall length (depth) of the receptacle 9 shown in Fig. 3 can be defined to a length equal to or shorter than that of a receptacle for only electrical signal use, and hence the receptacle 9 can be also miniaturized in size of depth.

Furthermore, in the subminiature single head optical plug 10 shown in Fig. 2, if a coaxial cable, for example, is inserted into the insides of the sleeve 4 and the tip 1 instead of the optical fiber 7, and the tip 1 and the core of the coaxial cable are electrically connected with each other as well as the shielding wire of the coaxial cable and the sleeve 4 are electrically connected with each other, such subminiature single head optical plug 10 can also be used as a subminiature single head plug for only electrical signal use having the same outside diameter size as that of the subminiature single head plug prescribed by JIS C6560, because the tip 1 electrically contacts with biasing retentive pieces 91 which function as electric contacts too, of the receptacle 9 as in the subminiature single head plug for only electrical signal use, each of the biasing retentive pieces 91 giving a force to retain the tip of the plug in place.

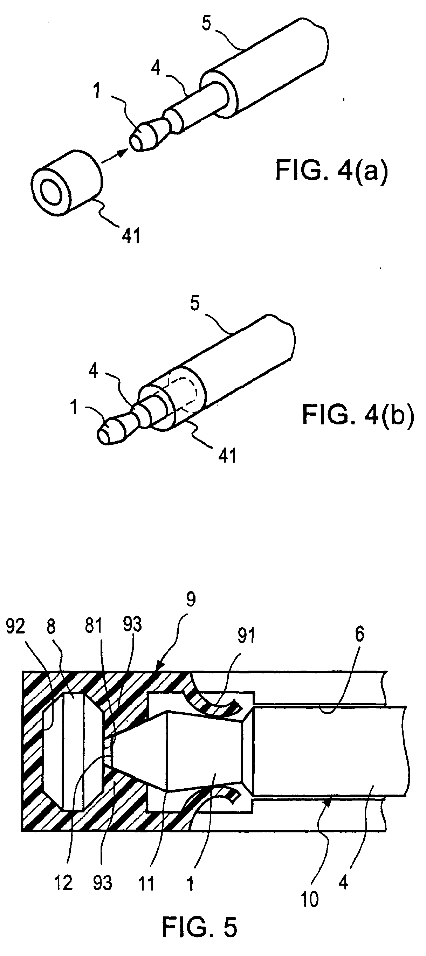

Further, in case that the depth of the receptacle 9 is reduced in correspondence to the short subminiature single head optical plug 10 the overall length of which has been shortened shown in Fig. 2, if the subminiature single head plug prescribed by JIS C6560 or the subminiature single head optical plug 10 of the first embodiment shown in Fig. 1 should be inserted into this receptacle 9 by mistake, there is a strong possibility that the front end of the tip of such plug collides against the optical element 8 or lens located in the inside of the receptacle 9 thereby to damage it. In order to avoid such collision, as shown in Fig. 4, a cylindrical adapter 41 the inside diameter of which is 2.5 mm, the outside diameter of which is substantially equal to that of the stem 5, and the axial length of which is, for example, about 4.6 mm or about 5.1 mm, is formed, and then it is put on the sleeve of the subminiature single head plug prescribed by JIS C6560 or the sleeve 4 of the subminiature single head optical plug 10 of the first embodiment shown in Fig. 1 and secured thereto.

In such case, the overall length of the plug cannot be shortened, but the receptacle can be miniaturized. As a result, it is possible to further miniaturize a miniature electronic apparatus to which the receptacle is to be mounted. In addition, in case of manufacturing the short subminiature single head optical plug 10 the overall length of which has been shortened shown in Fig. 2, a new mold or die must be manufactured. However, in case of using the adapter 41, plugs each having the same shape and size with each other (plugs manufactured by use of the same mold) can be used as the optical plug of the first embodiment or the optical plug of the second embodiment. Consequently, it is unnecessary to manufacture a new mold or die, which results in an advantage that the manufacturing efficiency is improved.

In place of using the adapter 41, a tip checking means may be provided on the receptacle side, which functions to limit insertion of a tip of the subminiature single head plug for only electrical signal use or only optical signal use into the receptacle to a predetermined position immediately before the optical element at the maximum.

Fig. 5 is a plan view showing an example of the receptacle a part of which is shown in section, which is constructed such that insertion of a tip of the subminiature single head plug into the receptacle is limited to a predetermined position at the maximum. This receptacle 9 is provided with a stopper 93 located at the front of the optical element 8 and having its tapered interior peripheral surface in which fits the tapered exterior peripheral surface of the tip 1, extending from the maximum diameter position 11 to the front end 12 thereof, of the subminiature single head optical plug 10, the stopper 93 being set such that the inside diameter of the tapered interior peripheral surface at a distance of, for example, 0.1 mm ahead from the front surface 81 of the optical element 8 (or the surface of lens) is equal to the outside diameter of the front end 12 of the tip 1.

With the construction mentioned above, as illustrated, even if the subminiature single head plug 10 prescribed by JIS C6560 or the subminiature single head optical plug 10 of the first embodiment shown in Fig. 1 should be inserted into the inserting hole 6 of this receptacle 9 by mistake, the front end 12 of the tip 1 is prevented from further advancing toward the optical element 8 at the position of 0.1 mm ahead from the front surface 81 of the optical element 8 by the stopper 93. Accordingly, even if a plug having its overall length longer than that of the subminiature single head optical plug 10 of the second embodiment shown in Fig. 2 is inserted into the receptacle 9, there is no possibility that the front end of the tip of the plug collides against the optical element 8 or the lens. Therefore, it is possible to prevent the optical element 8 or the lens from being damaged.

In case of using the receptacle 9 shown in Fig. 5 as a receptacle for only optical signal use, the whole of the receptacle 9 including a pair of opposed biasing retentive pieces 91 can be integrally formed by a molding of a thermoplastic synthetic resin. As a result, the manufacturing efficiency is improved and there is a room for reduction of cost. Since the receptacle 9 may be one having a simple construction in which the stopper 93 having its tapered interior peripheral surface, one pair of the biasing retentive pieces 91, and a recess 92 for accommodating the optical element 8 are merely formed, it is easy to form the receptacle 9 by a molding.

On the other hand, in case of using the receptacle 9 shown in Fig. 5 as a receptacle for optical signal use as well as electrical signal use, one pair of the biasing retentive pieces 91 are made from a resilient electric conductor such as a resilient metal or the like, and are fixed to predetermined locations of the receptacle 9. With such arrangement, one pair of the biasing retentive pieces 91 not only function to retain the tip 1 in place but also function as electric contacts. Accordingly, if the tip 1 and the sleeve 4 are made from an electric conductor, and the core of a coaxial cable is connected to the tip 1 and the shielding wire of the coaxial cable is connected to the sleeve for example, then an electrical signal can be transmitted or received through the receptacle 9.

In addition, in case of using the subminiature single head optical plug 10 shown in Fig. 1 or 2 as a plug for only optical signal use, the whole of the optical plug 10 including the optical fiber can be manufactured by an insert molding of a thermoplastic synthetic resin. As a result, like the optical receptacle, the manufacturing efficiency is improved and there is a room for reduction of cost. Moreover, it is easy to form the optical plug 10 by the molding.

In the second embodiment, while the overall length of the optical plug 10 is determined to 7 mm at the maximum, this is merely an example thereof, and the overall length of the optical plug 10 may be further shortened or lengthened by making the overall length of the sleeve shorter or longer. However, it is preferable that the overall length of the optical plug 10 is shortened to the extent that at least the depth of the corresponding receptacle can be reduced.

As is apparent from the foregoing discussion, in accordance with the present invention, the subminiature optical connector is constructed such that the outside diameter of the sleeve of the subminiature single head optical plug of the subminiature optical connector is determined to 2.5 mm which is the same as that of the sleeve of the two-electrode or three-electrode subminiature single head plug for only electrical signal use prescribed by JIS C6560, and the optical element is located in the corresponding receptacle into which the optical plug is to be inserted at a position entered toward the inside of the receptacle by at least a distance equal to the maximum overall length of the subminiature single head optical plug from the end surface of the approach to the inserting hole of the receptacle. Therefore, it is possible that the fluctuations of space between the optical fiber and the optical element occurring due to the unevenness in manufacture of each of products of the subminiature single head optical plugs fall within the range of 0 mm to 0.3 mm. As a result, there is obtained a remarkable advantage that optical signals having substantially the same quantity of light with one another can always be transmitted without regard to the unevenness in manufacture of the subminiature single head optical plugs. Moreover, there are also obtained advantages that the subminiature single head optical plug can be used together with a receptacle in practical use, and that it gives no damage to the optical element or lens.

In addition, the subminiature single head optical plug can be greatly shortened in its overall length by reducing the overall length of the sleeve thereof in large degree. When the overall length of the optical plug is greatly shortened, the overall length (depth) of a receptacle corresponding to the short subminiature single head optical plug can also be shortened than that of the receptacle corresponding to the subminiature single head plug for only electrical signal use prescribed by JIS C6560. Consequently, there are obtained advantages that the subminiature single head optical plug and the receptacle can be miniaturized and that it is possible to further miniaturize a portable type electronic apparatus by mounting such subminiature optical receptacle to the electronic apparatus.

Furthermore, in case of using the subminiature plug and the receptacle as a subminiature single head optical plug and an optical receptacle both for only optical signal use, they can be integrally formed by a molding of a thermoplastic synthetic resin. As a result, an advantage is obtained that the manufacturing costs of the subminiature single head optical plug and the optical receptacle can be reduced. In addition, the optical receptacle can be used together with the subminiature single head plug for only electrical signal use prescribed by JIS C6560.

While the present invention has been described with regard to the preferred embodiments shown by way of example, it will be apparent to those skilled in the art that various modifications, alterations, changes, and/or minor improvements of the embodiments described above can be made without departing from the spirit and the scope of the present invention. Accordingly, it should be understood that the present invention is not limited to the illustrated embodiments, and is intended to encompass all such modifications, alterations, changes, and/or minor improvements falling within the scope of the invention defined by the appended claims.

**Claims**

1. A subminiature optical connector comprising: a subminiature single head optical plug; and a connecting terminal into which said plug is to be inserted,

   said subminiature single head optical plug comprising:

   a cylindrical sleeve having its outside diameter of approximately 2.5 mm; and a hollow tip coupled to the front end of said sleeve and having its maximum diameter position located between the front end and the rear end of said tip, the overall length of said plug extending from the rear end of said sleeve to the front end of said tip being defined to a length between 11.8 mm and 12.1 mm.

2. The subminiature optical connector as set forth in claim 1, wherein said subminiature single head optical plug is defined such that a length extending from the rear end of said sleeve to the maximum diameter position of said tip is $(10.3 \pm 0.3)$ mm.

3. The subminiature optical connector as set forth in claim 1 or 2, wherein said connecting terminal is provided with biasing retentive pieces for giving a force to retain the tip of said subminiature single head optical plug in place, and includes an optical element located at a position entered toward the inside of the connecting terminal by at least a distance equal to the maximum overall length of the subminiature single head optical plug from the end surface of the approach to an inserting hole into which the subminiature single head optical plug is to be inserted.

**4.** The subminiature optical connector as set forth in claim 1 or 2, wherein said subminiature single head optical plug includes an optical fiber extending through the inside of the sleeve into the inside of the tip, and the front end surface of the core of said optical fiber is located in the tip at the immediate inner side of the front end of the tip.

**5.** The subminiature optical connector as set forth in claim 4, wherein said subminiature single head optical plug inclusive of said optical fiber is integrally formed by a molding of a synthetic resin.

**6.** The subminiature optical connector as set forth in claim 3, wherein said connecting terminal except said optical element is integrally formed by a molding of a synthetic resin.

**7.** The subminiature optical connector as set forth in claim 3, wherein said subminiature single head optical plug includes electric cables extending in the insides of the sleeve and the tip, at least a portion of each of the sleeve and the tip is made from an electric conductor, the electric conductors of the sleeve and the tip are electrically connected to corresponding cables of said electric cables respectively, and the biasing retentive pieces are made from a resilient electric conductor.

**8.** A subminiature optical connector comprising:

a subminiature single head optical plug including a cylindrical sleeve having its outside diameter of approximately 2.5 mm; a hollow tip coupled to the front end of said sleeve and having its maximum diameter position located between the front end and the rear end of said tip; and an optical fiber extending through the inside of the sleeve into the inside of the tip, a length extending from the rear end of said sleeve to the maximum diameter position of said tip is defined to (10.3 ± 0.3) mm, and the overall length of said optical plug extending from the rear end of said sleeve to the front end of said tip being defined to a length between 11.8 mm and 12.1 mm; and a connecting terminal provided with biasing retentive pieces for giving a force to retain the tip of said subminiature single head optical plug in place, and including an optical element located at a position entered toward the inside of the connecting terminal by at least a distance equal to the maximum overall length of the subminiature single head optical plug from the end surface of the approach to an inserting hole into which the subminiature single head optical plug is to be inserted.

**9.** The subminiature optical connector as set forth in claim 8, wherein said subminiature single head optical plug inclusive of said optical fiber is integrally formed by a molding of a synthetic resin, and said connecting terminal except said optical element is integrally formed by a molding of a synthetic resin.

**10.** A subminiature optical connector comprising:

a subminiature single head optical plug; and a connecting terminal into which said plug is to be inserted,
said subminiature single head optical plug comprising:

a cylindrical sleeve having its outside diameter of approximately 2.5 mm; and a hollow tip coupled to the front end of said sleeve and having its maximum diameter position located between the front end and the rear end of said tip,
the overall length of said plug extending from the rear end of said sleeve to the front end of said tip being defined to a length shorter than 11.6 mm.

**11.** The subminiature optical connector as set forth in claim 10, wherein said subminiature single head optical plug is formed to have the overall length thereof shorter than 11.6 mm extending from the rear end of the sleeve to the front end of the tip by reducing the overall length of the sleeve.

**12.** The subminiature optical connector as set forth in claim 10 or 11, wherein said connecting terminal is provided with biasing retentive pieces for giving a force to retain the tip of said subminiature single head optical plug in place, and includes an optical element located at a position entered toward the inside of the connecting terminal by at least a distance equal to the maximum overall length of the subminiature single head optical plug from the end surface of the approach to an inserting hole into which the subminiature single head optical plug is to be inserted.

**13.** The subminiature optical connector as set forth in claim 10 or 11, wherein said subminiature single head optical plug includes an optical fiber extending through the inside of the sleeve into the inside of the tip, and the front end surface of the core of said optical fiber is located in the tip at the immediate inner side of the front end of the tip.

**14.** The subminiature optical connector as set forth in claim 13, wherein said subminiature single head optical plug inclusive of said optical fiber is integrally formed by a molding of a synthetic resin.

15. The subminiature optical connector as set forth in claim 12, wherein said connecting terminal except said optical element is integrally formed by a molding of a synthetic resin.

16. The subminiature optical connector as set forth in claim 12, wherein said subminiature single head optical plug includes electric cables extending in the insides of the sleeve and the tip, at least a portion of each of the sleeve and the tip is made from an electric conductor, the electric conductors of the sleeve and the tip are electrically connected to corresponding cables of said electric cables respectively, and the biasing retentive pieces are made from a resilient electric conductor.

17. The subminiature optical connector as set forth in claim 12, wherein said subminiature single head optical plug is greatly reduced in the overall length thereof extending from the rear end of the sleeve to the front end of the tip by shortening the overall length of the sleeve by a length that is more than a length corresponding to the depth of the optical element located inside the connecting terminal.

18. A subminiature optical connector comprising:

   a subminiature single head optical plug including a cylindrical sleeve having its outside diameter of approximately 2.5 mm; a hollow tip coupled to the front end of said sleeve and having its maximum diameter position located between the front end and the rear end of said tip; and an optical fiber extending through the inside of the sleeve into the inside of the tip, the overall length of said plug extending from the rear end of said sleeve to the front end of said tip being defined to a length shorter than 11.6 mm by reducing the overall length of the sleeve, and
   a connecting terminal provided with biasing retentive pieces for giving a force to retain the tip of said subminiature single head optical plug in place, and including an optical element located at a position entered toward the inside of the connecting terminal by at least a distance equal to the maximum overall length of the subminiature single head optical plug from the end surface of the approach to an inserting hole into which the subminiature single head optical plug is to be inserted.

19. The subminiature optical connector as set forth in claim 18, wherein said subminiature single head optical plug inclusive of said optical fiber is integrally formed by a molding of a synthetic resin, and said connecting terminal except said optical element is integrally formed by a molding of a synthetic resin.

20. The subminiature optical connector as set forth in claim 1 or 2, wherein a cylindrical adapter of a predetermined length having its inside diameter of approximately 2.5 mm is fitted on and fixed to the sleeve of said subminiature single head optical plug having its overall length defined to a length between 11.8 mm and 12.1 mm.

21. The subminiature optical connector as set forth in any one of claim 12, 15 or 18, wherein said connecting terminal is provided with a tip checking means for stopping, when said subminiature single head optical plug is inserted into the inserting hole, an onward movement of the front end of said tip into the connecting terminal at a position immediately before the optical element.

22. A portable type electronic apparatus provided with the connecting terminal of said subminiature single head optical connector as set forth in any one of claim 3, 6, 7, 12, 15, 16 or 21.

EP 1 184 697 A1

FIG. 1

FIG. 2

FIG. 3

FIG. 4(a)

FIG. 4(b)

FIG. 5

FIG. 6

FIG. 7

## INTERNATIONAL SEARCH REPORT

| International application No. |
|---|
| PCT/JP01/03186 |

A. CLASSIFICATION OF SUBJECT MATTER
Int.Cl$^7$  G02B6/42

According to International Patent Classification (IPC) or to both national classification and IPC

B. FIELDS SEARCHED

Minimum documentation searched (classification system followed by classification symbols)
Int.Cl$^7$  G02B 6/24-6/43
H01R13/46
H01R24/00-24/18

Documentation searched other than minimum documentation to the extent that such documents are included in the fields searched
Jitsuyo Shinan Koho        1922-1996    Toroku Jitsuyo Shinan Koho  1994-2001
Kokai Jitsuyo Shinan Koho   1971-2001    Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 6-140106, A (Sharp Corporation),<br>20 May, 1994 (20.05.94),<br>Par. Nos. [0005], [0036] to [0051]; Figs. 1 to 6, 47<br>(Family: none) | 1-22 |
| Y | EP, 279359, A1 (Hoshiden Electronics, Co., Ltd.),<br>24 August, 1988 (24.08.88),<br>Column 12, lines 1 to 14; Column 4, line 20 to Column 5,<br>line 51; Fig.8,9<br>& US, 4778240, A    & JP, 2-31735, Y2 | 1-22 |
| Y | JP, 1-183225, A (Sharp Corporation),<br>21 July, 1989 (21.07.89),<br>Fig. 4   (Family: none) | 1-22 |
| Y | JP, 3007979, Z1 (Kabushiki Kaisha Audio Tecnika),<br>07 December, 1994 (07.12.94),<br>Par. No. [0002]   (Family: none) | 1-22 |
| Y | EP, 932062, A1 (Fujitsu Limited),<br>28 July, 1999 (28.07.99),<br>Column 12, lines 1 to 14; Column 11, lines 11 to 48 | 10-19,21,22 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 July, 2001 (02.07.01) | Date of mailing of the international search report<br>10 July, 2001 (10.07.01) |
|---|---|
| Name and mailing address of the ISA/<br>Japanese Patent Office | Authorized officer |
| Facsimile No. | Telephone No. |

Form PCT/ISA/210 (second sheet) (July 1992)

**EP 1 184 697 A1**

## INTERNATIONAL SEARCH REPORT

International application No.

PCT/JP01/03186

C (Continuation). DOCUMENTS CONSIDERED TO BE RELEVANT

| Category* | Citation of document, with indication, where appropriate, of the relevant passages | Relevant to claim No. |
|---|---|---|
| | & US, 6126325, A    & JP, 11-211937, A | |
| Y | JP, 6-111876, A (Excel Denshi K.K.),<br>22 April, 1994 (22.04.94),<br>Fig. 4   (Family: none) | 21 |

Form PCT/ISA/210 (continuation of second sheet) (July 1992)

**EP 1 184 697 A1**

## INTERNATIONAL SEARCH REPORT

| International application No. |
| --- |
| PCT/JP01/03186 |

**Box I   Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

    The inventions of claims 1-9 relate to an optical connector involving a "special technical feature" the purpose of which is to adapt the optical connector to existing standards that "the optical connector comprises a plug which is provided with a cylindrical sleeve having an outside diameter of about 2.5 mm and a hollow chip connected to an end of the sleeve and having a maximum diameter at its intermediate portion and the overall length of which from the other end of the sleeve to the end of the chip ranges from 11.8 mm to 12.1 mm".
    The inventions of claims 10-12 relate to an optical connector involving a "special technical feature" that the optical connector comprises a plug "provided with a cylindrical sleeve having an outside diameter of about 2.5 mm and a hollow chip connected to an end of the sleeve and having a maximum diameter at its intermediate portion, and the overall length of the plug is shorter than 11.6 mm", which is out of the existing standards.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☒ The additional search fees were accompanied by the applicant's protest.
                      ☐ No protest accompanied the payment of additional search fees.

Form PCT/ISA/210 (continuation of first sheet (1)) (July 1992)